# FASCICULE DE BREVET EUROPEEN

(11) **EP 2 504 206 B1**
(45) Date de publication et mention de la délivrance du brevet: **31.10.2018**
(21) Numéro de dépôt: 10824263.7
(22) Date de dépôt: 22.11.2010
(51) Int. Cl.: B60S 1/52

(54) **BALAI D'ESSUIE-GLACE ET DISPOSITIF D'ESSUYAGE ET DE LAVAGE D'UNE SURFACE VITRÉE D'UN VÉHICULE AUTOMOBILE ET PROCÉDÉ D'ESSUYAGE ET DE LAVAGE CORRESPONDANT.**
SCHEIBENWISCHERBLATT UND VORRICHTUNG ZUM ABWISCHEN UND WASCHEN EINER GLASFLÄCHE EINES KRAFTFAHRZEUGES SOWIE ZUGEHÖRIGES ABWISCH- UND WASCHVERFAHREN
WINDSCREEN-WIPER BLADE AND DEVICE FOR WIPING AND WASHING A GLAZED SURFACE OF A MOTOR VEHICLE AND CORRESPONDING WIPING AND WASHING METHOD

(30) Priorité: 23.11.2009 FR 0958273
(43) Date de publication de la demande: 03.10.2012
(73) Titulaire: PSA Automobiles SA, 78300 Poissy (FR); MGI Coutier, 01410 Champfromier (FR)
(72) Inventeur: JEUFFE, Gérard, 78580 Bazemont (FR); HAMZA, Brahim, 07500 Guilherand-granges (FR); ISSARTEL, Jean-Michel, 26100 Romans Sur Isere (FR); BOUGUERRA, Akim Driss, 69100 Villeurbanne (FR); EMAILLE, Rodolphe, 38260 La Cote St Andre (FR)
(74) Mandataire: Ménès, Catherine
(86) Numéro de dépôt international: PCT/FR2010/052484
(87) Numéro de publication internationale: WO 2011/061461

(56) Documents cités:
- EP-A1- 1 918 167
- WO-A1-01/51323
- FR-A1- 2 648 771
- FR-A1- 2 933 933
- GB-A- 410 259
- US-A- 4 811 451
- US-A- 5 944 910
- US-A1- 2008 127 441

## Description

La présente invention est relative à un balai d'essuie glace dont la caractéristique essentielle réside dans le fait qu'il comporte au moins un gicleur monté parallèlement à la lèvre de la raclette en vue de répandre un filet de fluide de lavage sur la lèvre de la raclette.

Un balai d'essuie glace traditionnel comporte généralement un bras commandé en rotation alternée par un moteur d'entraînement réversible, ce bras supportant une raclette souple en caoutchouc ou matériau similaire, qui est appliquée contre la surface du pare brise grâce au montage entre elle et le bras d'un système de palonnier à ressorts, déformable selon la position angulaire du bras et la courbure du pare brise dans la zone en regard sur laquelle s'appuie la raclette.

En variante, la raclette du balai peut être directement reliée au bras oscillant au moyen d'une vertèbre flexible qui s'étend sur toute la longueur de la raclette et qui comporte une armature de raidissement métallique ou autre, intégrée, réunie à une lèvre souple appliquée sur la surface vitrée.

Dans d'autres solutions encore, le bras n'est pas animé d'un mouvement d'oscillation autour d'un axe mais d'un mouvement de déplacement linéaire vis-à-vis de la surface vitrée à balayer, l'appui de la raclette sur celle-ci utilisant en principe les mêmes moyens que dans la version oscillante.

Dans tous les cas, le bras exerce sur la raclette souple du balai un effort sensiblement normal au pare brise grâce à la déformation du palonnier à ressorts ou à la flexibilité relative de la vertèbre, cet effort variant en fonction de la courbure de la surface vitrée au droit du contact avec la raclette.

Dans l'état de la technique, le nettoyage d'un pare brise ou d'une lunette arrière s'effectue classiquement en pulvérisant un fluide de lavage sur la surface vitrée à l'aide de gicleurs disposés sur le capot du véhicule ou sur la grille d'auvent du véhicule. Ces gicleurs implantés à distance de la surface vitrée à nettoyer sont très délicat à régler pour obtenir une pulvérisation efficace. Ces gicleurs dits fluidiques projettent sous forme d'un spray du liquide de lavage sur toute la zone de surface vitrée. Cette opération de lavage utilise un volume de fluide important et masque pendant quelques secondes la visibilité au conducteur. De plus, lors de conduite nocturne la projection des faisceaux des projecteurs des véhicules venants en sens inverse, provoque une défragmentation de leurs faisceaux sur le pare-brise et éblouit le conducteur durant quelques instants. Par conséquent, cette opération de lavage et d'essuyage peut s'avérer très dangereuse par les risques potentiels qu'elle pourrait impliquer. De plus, suivant la vitesse du véhicule, la projection du jet est variable, par exemple, à vitesse élevée, le jet est projeté uniquement en partie inférieure de la surface vitrée ce qui fournit naturellement un nettoyage insuffisant de la dite surface vitrée. On comprend que le système de lavage est donc conçu spécifiquement pour chaque type de véhicule, ce qui entraîne des coûts de développements notables.

Dans l'état de la technique, nous connaissons notamment le document WO01/51323, celui-ci décrit un balai d'essuyage comprenant une raclette et des conduits longitudinaux additionnels accolés sur la vertèbre de la raclette. Ces conduits forment des rampes d'aspersion destinées à projeter un fluide de lavage sous forme de spray sur la surface vitrée en avant de la lèvre de la raclette lors du mouvement de balayage.

Le document US5944910 décrit un balai d'essuie-glace selon le préambule de la revendication 1.

Le document DE1755762, décrit un dispositif de projection de liquide de lavage par rapport à un mécanisme d'essuyage d'un pare brise. Le mécanisme comporte un balai essuie glace monté mobile en balayage par rapport à la surface vitrée et comporte classiquement un ensemble support longitudinal et d'une raclette d'essuyage.

Le dispositif de projection est constitutif du bras sur lequel est monté le balai et est adapté relativement au balai afin que la projection du fluide de lavage sous la forme d'un jet soit projetée sur la surface vitrée en avant de la lèvre de la raclette par rapport à son mouvement de balayage.

Le document FR2916716 propose un agencement d'un dispositif de projection de fluide de lavage. La buse de projection du fluide de lavage est placée en bout et à l'extérieur de la raclette, précisément dans l'axe de sa partie médiane de façon à pulvériser alternativement durant son mouvement de balayage, un jet de fluide sur la surface vitrée à l'avant de la lèvre de la raclette.

En particulier, dans cet agencement la buse de projection du fluide de lavage placée en bout du balai d'essuie vitre est portée par le bras sur lequel est monté le balai d'essuie glace. Ainsi, l'alignement de l'axe de la raclette et du gicleur permet uniquement de projeter du liquide de lavage sur la surface vitrée à l'avant de la raclette sur la surface vitrée lorsque celle-ci est en mouvement d'essuyage et de lavage de la surface vitrée.

La problématique de ce dispositif réside dans le fait que le liquide de lavage est balayé instantanément lors du mouvement du balai d'essuie vitre et le liquide de lavage du fait de la vitesse ne peut se répandre sur toute la longueur du balai même si la force centrifuge tend à le diriger vers l'extrémité supérieure de la lèvre de la raclette. Dans ces conditions, l'essuyage et le lavage de la surface vitrée ne sont pas correctement effectués.

Afin de remédier à ces problèmes, nous avons conçu un balai d'essuie vitre et un procédé d'essuyage et de lavage permettant de nettoyer toute la zone parcourue par le balai d'essuie vitre, en répandant préalablement le liquide de lavage sur la longueur de la lèvre de la raclette lorsque la lèvre de la raclette du balai d'essuie vitre est dans une phase d'arrêt avant son retournement.

Le document EP 0860336 propose une raclette reliée de façon classique à un bras d'essuie glace mobile pour effectuer le nettoyage d'une surface vitrée. La raclette comporte dans sa partie inférieure la lèvre et dans sa partie supérieure des moyens de fixation à une monture et un canal s'étendant longitudinalement à l'intérieur de la raclette afin de véhiculer un fluide de lavage jusqu'à une pièce terminale, à chacune des extrémités de la raclette, possédant un embout d'alimentation en fluide introduit dans le canal de la raclette. L'embout d'alimentation est positionné dans l'axe médian de la pièce terminale comportant des conduits en vé inversé dont les buses de sortie sont dirigées de manière à délivrer un jet sous forme de spray à une distance variable selon l'angle du vé sur la surface vitrée de part et d'autre de la raclette.

L'ensemble des documents de l'art antérieur divulgue des systèmes de lavage et d'essuyage projetant systématiquement du liquide de lavage sur une partie de la surface vitrée, ce qui permet de se dispenser de réglage et de positionnement précis du gicleur ou conduit par rapport à la raclette du balai d'essuie glace.

L'invention a pour but de proposer un balai d'essuie glace et un dispositif de lavage et d'essuyage permettant de s'affranchir de ces inconvénients notamment en supprimant les réglages fastidieux des gicleurs sur le capot et dans la grille d'auvent et assurant la une bonne répartition du liquide de lavage sur le fil de raclette en contact avec la surface vitrée. A cette fin, le conduit d'arrivée du fluide de lavage se doit d'être rigoureusement positionné par rapport à la lèvre de la raclette du balai d'essuie glace afin de projeter le liquide de lavage uniformément dans la concavité longitudinale de la lèvre de la raclette du balai d'essuie glace. De ce fait, durant l'opération de lavage et d'essuyage de la surface vitrée, le liquide de lavage est uniquement emprisonné sous la lèvre du balai d'essuie glace et la visibilité totale est assurée au conducteur.

A cet effet, le balai d'essuie glace de véhicule automobile, comportant une raclette souple allongée, une sortie de conduit disposée de manière à pouvoir projeter un jet de liquide selon la direction longitudinale de la raclette où la sortie de conduit est décalée sur le côté de la raclette souple par rapport au plan médian longitudinal de la raclette souple et en ce que la raclette supporte un conduit équipé d'un gicleur, décalé latéralement par rapport à l'axe longitudinal médian de la raclette caractérisé en ce que la distance avec laquelle le gicleur est décalé latéralement est telle que lorsque le balai d'essuie glace est en position inactive sur la surface vitrée, l'orifice du gicleur soit positionné en direction de la partie concave de la lèvre de la raclette afin de projeter le liquide de lavage uniformément dans la concavité longitudinale de la lèvre de la raclette du balai d'essuie-glace, de manière que le jet de liquide de lavage qui a une forme cylindrique se répande sur la majeure partie de la longueur de la lèvre de la raclette.

Selon d'autres caractéristiques avantageuses de l'invention :
- La sortie de conduit est disposée au niveau d'une des deux extrémités de la raclette.
- La sortie de conduit est disposée le long de la raclette.
- La sortie du conduit comprend un gicleur.
- L'axe du gicleur est disposé parallèlement à la lèvre de la raclette de manière à diriger le fluide de lavage sur la concavité de la lèvre de la raclette lorsque celle-ci est dans sa position d'arrêt, avant son retournement, ce qui permet d'optimiser l'écoulement du liquide de lavage dans la concavité de la lèvre de la raclette.
- L'axe du gicleur est orienté en direction de la lèvre de la raclette de manière à diriger le fluide de lavage sur la lèvre de la raclette lorsque celle-ci est dans sa position d'arrêt, avant son retournement en vue d'effectuer l'essuyage de la surface vitrée, ce qui permet de répartir uniformément le liquide de lavage sur la surface vitrée.
- Le conduit du gicleur est disposé dans un moyen apte à le maintenir dans une position déterminée par rapport à la lèvre de la raclette.
- Le moyen de maintien est un anneau élastique constitutif d'un support lui-même clippé de façon appropriée sur l'extrémité du balai d'essuie glace, ce qui permet d'assurer un maintien efficace et peu onéreux.
- Le conduit du gicleur comporte à son extrémité opposée au gicleur un moyen de raccordement d'une canalisation destinée à véhiculer le fluide de lavage du réservoir de stockage en direction du conduit et du gicleur.
- Le conduit de sortie délivre un débit constant, ce qui procure de la simplicité de mise en oeuvre en supprimant les réglages.
- L'invention a également pour objet un bras d'essuie glace portant un balai d'essuie glace dont la sortie de conduit est disposée au niveau de l'extrémité de la raclette qui est située du côté de la fixation du bras.
- L'invention a également pour objet un dispositif de lavage et d'essuyage comportant au moins un balai d'essuie glace d'une surface vitrée selon l'invention ou un bras d'essuie glace selon l'invention et un véhicule automobile comportant au moins un dispositif de lavage et d'essuyage d'une surface vitrée selon la présente invention.

L'invention concerne un procédé de lavage et d'essuyage d'une surface vitrée comprenant au moins un balai d'essuie glace, comportant une raclette souple, allongée, en appui sur la surface vitrée à balayer, la raclette supportant, une sortie de conduit décalée sur le côté de la raclette d'une distance telle que lorsque le balai d'essuie-vitre est en position de fin de course de l'essuie-vitre sur la surface vitrée, la sortie de conduit est positionnée en regard de la partie concave de la lèvre de la raclette, comprenant :
- avant le démarrage de la raclette, une étape d'écoulement du jet de liquide de lavage sur la majeure partie de la longueur de la partie concave de la lèvre de la raclette par la sortie de conduit disposée,
- lors de la mise en mouvement de la raclette, une étape de retournement la lèvre au cours de laquelle le liquide de lavage se répand sur la partie de la lèvre en contact avec la surface vitrée afin de réaliser le lavage de la zone vitrée à nettoyer.

Dans le procédé selon l'invention, une ou plusieurs des caractéristiques précédentes peuvent être ajoutées :
- Le jet de lavage est régulé pour s'écouler sur la longueur de la lèvre de la raclette sur au moins les trois quarts de sa longueur.
- Le liquide de lavage se répand depuis le gicleur disposé sur une première extrémité de la lèvre de la raclette, jusqu'à une deuxième extrémité de la lèvre de la raclette sous l'effet de la force centrifuge lorsque la raclette est en mouvement, la deuxième extrémité décrivant un plus grand rayon dans son mouvement que la première extrémité.
- Lors de l'arrêt de la raclette dans sa position sensiblement vertical en fin de course de la zone à essuyer, avant son retournement un jet de liquide de lavage est répandu sur la longueur de la lèvre de la raclette par le gicleur disposé sur l'extrémité de la raclette décrivant un plus grand rayon que l'autre extrémité.

L'invention a également pour objet un procédé de lavage et d'essuyage comportant au moins un balai d'essuie-glace d'une surface vitrée selon l'invention.

D'autres caractéristiques d'un balai d'essuie-glace réalisé conformément à l'invention, apparaîtront encore à travers la description qui suit de plusieurs exemples de réalisation donnés à titre indicatif et non limitatif en référence aux dessins annexés sur lesquels:
- La figure 1 est une vue en perspective d'un ensemble d'essuyage et de lavage d'une surface vitrée conforme à l'invention en position inactive.
- La figure 2 est une section de profil en section A-A de la figure 4 d'un balai d'essuie vitre équipé d'un support et de son gicleur selon l'invention où la lèvre la raclette est représentée dans une position neutre dans le plan médian longitudinal.
- La figure 3 est une vue de profil d'un balai d'essuie vitre équipé d'un support et de son gicleur dont la raclette est uniquement représentée en coupe A-A de la figure 5 suivant l'invention en position inactive sur une surface vitrée.
- La figure 4 est une vue de profil d'un balai d'essuie vitre équipé d'un support et de son gicleur dont la raclette est uniquement représentée en coupe A-A de la figure 5 suivant une position de balayage de la surface vitrée.
- La figure 5 est une vue en perspective de l'extrémité d'un balai d'essuie glace équipé d'un embout terminal recevant le conduit équipé d'un gicleur suivant l'invention.
- La figure 6 est une vue en section B-B de la figure 2 de l'extrémité d'un balai d'essuie glace équipé d'un embout terminal montrant le conduit équipé de son gicleur suivant l'invention.
- La figure 7 est une vue en coupe c-c de la figure 3.

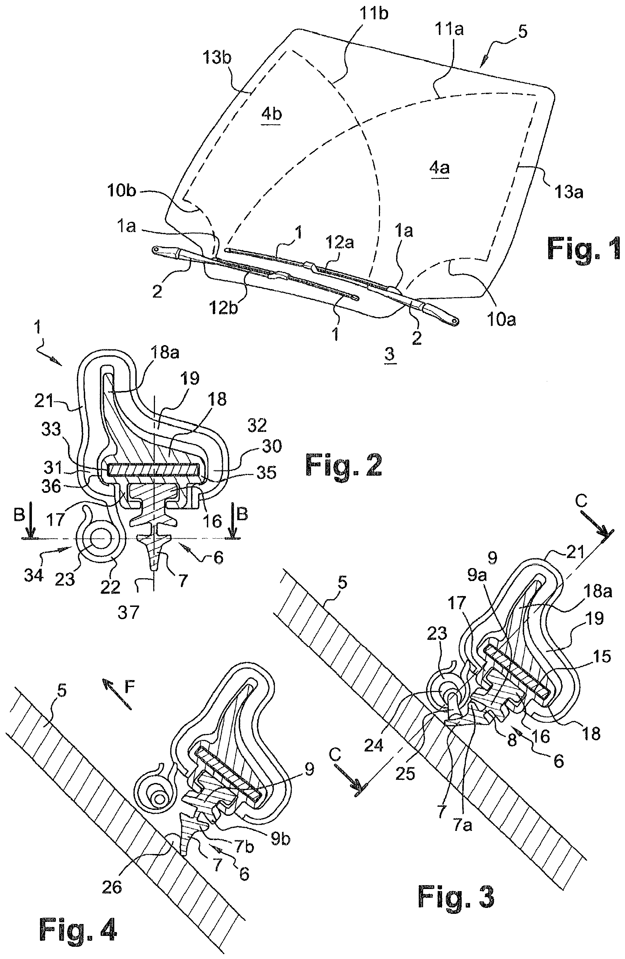

La figure 1 montre une vue en perspective d'un ensemble d'essuyage et de lavage d'une surface vitrée comprenant une paire de balai d'essuie glace conforme à l'invention en position inactive. Sur cette vue les balais d'essuie glace 1 sont montés de façon classique sur un bras 2 par une articulation sensiblement disposée dans la partie médiane du balai d'essuie glace 1. A l'autre extrémité les bras 2 sont fixés sur des moyens moteurs liés à la carrosserie 3 afin que les balais parcourent simultanément les zones à essuyer 4a-4b sur la surface vitrée tel que par exemple un pare brise 5. Sur la figure, les balais d'essuie glace 1 sont représentés dans leurs positions inactives c'est à dire dans une position parallèles entre eux et sensiblement parallèle à la bordure inférieure du pare brise. Les balais d'essuie glaces tels que représentés sur la figure sont dit antagonistes car ils se déplacent dans un mouvement opposé l'un par rapport à l'autre. Les balais d'essuie glaces peuvent également se déplacer parallèlement l'un par rapport à l'autre ou bien un seul essuie glace peut être disposé pour essuyer une zone du pare brise ou d'une lunette arrière ou bien encore des projecteurs. Toutes ces variantes de moyens d'essuyage n'affectent en aucune façon le principe de fonctionnement du balai d'essuie glace suivant l'invention qui sera décrit ultérieurement. Les balais d'essuie glace 1 représentés sur la figure comportent à leurs extrémités inférieures sur un embout terminal 1a adapté et dans une position parallèle, à la raclette des balais d'essuie glaces, un conduit équipé d'un gicleur, placé du côté de la zone à essuyer et permettant de délivrer un jet de liquide de lavage sur la lèvre de la raclette du balai d'essuie glace. Les gicleurs placés sur la partie inférieure du balai décrivent par rapport à l'axe de rotation du bras un petit rayon 10a-10b lors du balayage de la zone à essuyer, tandis que l'extrémité supérieure du balai décrit un grand rayon 11a-11b. Le débattement des balais entre leurs positions 12a-12b parallèle à la bordure inférieure du pare brise et leurs positions 13a-13b sensiblement parallèle à la bordure latérale du pare brise définit les zones 4a-4b à essuyer. Un gicleur pourrait également être éventuellement monté à l'extrémité supérieure du balai d'essuie glace, placé à l'inverse du gicleur placé à l'extrémité inférieure, c'est à dire placé du côté de la zone à essuyer lorsque le balai se trouve dans sa position maximale sensiblement parallèle au bord latéral du pare brise.

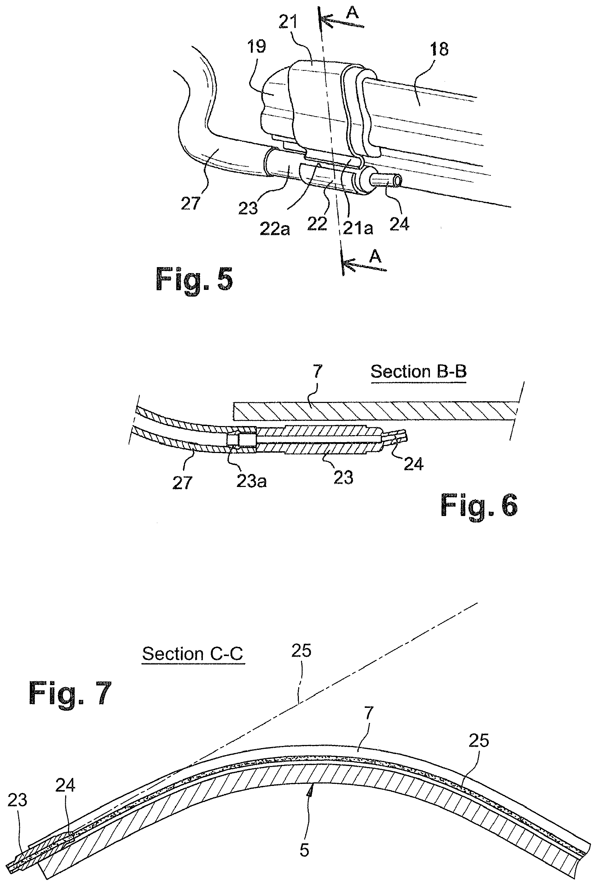

La figure 2 est une section de profil en section A-A de la figure 5 d'un balai d'essuie vitre équipé d'un support et de son gicleur selon l'invention où la lèvre la raclette est représentée dans une position neutre dans le plan médian longitudinal.

Le balai d'essuie glace 1 illustré sur la figure, comporte essentiellement une raclette 6 souple, allongée, en caoutchouc ou matériau similaire approprié à son usage pour le nettoyage d'une surface vitrée 5 contre laquelle s'applique la lèvre 7 de la raclette 6, notamment constituée par la surface du pare brise avant ou de la lunette arrière d'un véhicule automobile.

La raclette 6 possède dans sa partie supérieure un tenon 16 qui vient s'assembler dans une mortaise 17 ménagée dans la partie inférieure de l'ossature 18. Le tenon 16 de la raclette 6 coulisse librement dans la mortaise 17 de l'ossature 18. Cette ossature 18 possède une paroi s'amenuisant progressivement dans un plan vertical pour former un déflecteur 18a. L'ossature 18 comporte des moyens de raccordements articulés (non représentés) au bras 2. Afin d'améliorer l'aspect global du balai d'essuie glace 1, des capuchons 19 enjoliveurs sont montés à chacune des extrémités des balais d'essuie glace. Les capuchons 19 viennent recouvrir les extrémités de l'ossature 18 et en partie de la raclette 6 afin de renforcer la qualité perçue. Afin de positionner l'axe du conduit 20 dans une position parallèle à l'axe de la raclette 6 à une distance telle que celui-ci se trouve en vis-à-vis de la concavité de la lèvre 7 de la raclette 6 lorsque celle-ci est en position inactive, c'est-à-dire dans une position de repos quand elle se trouve sensiblement parallèle au bord inférieur de la surface vitre 5 tel que par exemple un pare brise de véhicule automobile, tel que nous le verrons plus loin à l'appui de la figure 3. Les capuchons 19 ont la forme générale du profil de l'ossature 18 qu'ils viennent coiffer à chaque extrémité. En particulier, dans leur partie inférieure, ils possèdent deux branches sensiblement en forme de C 30-31 placé en vis-à-vis permettant de les guider et d'enserrer la partie courante de l'ossature 18, des protubérances 32-33 sont disposées dans le creux des C d'exercer un serrage sur les flancs 35-36 de l'ossature 9 lors du montage par coulissement des capuchons 19.

Dans cette version de raclette 6, le capuchon 19 reçoit un support profilé 21 qui se prolonge en partie inférieure par un moyen de maintien 22 d'un ensemble 34 conduit et gicleur, du coté de la raclette 6 où s'exerce le mouvement de balayage du balai d'essuie glace 6. L'ensemble 34 conduit et gicleur est incorporé avec une orientation précise en adéquation avec la position de la lèvre 7 de la raclette 6. Cet ensemble 34 permet de délivrer un jet de liquide de lavage sur la lèvre 7 de la raclette 6 du balai d'essuie glace 1. Du fait du guidage précis du capuchon 19 lors de son montage sur le balai d'essuie glace 1, l'ensemble 34 conduit et gicleur est positionné de façon décalée et rigoureusement précise par rapport à la lèvre 7 de la raclette 6.

Sur la figure 2, on a représenté, le balai d'essuie glace 1 comprenant la raclette 6, dans une position neutre, c'est-à-dire dans une position où le balai d'essuie vitre 1 ne repose pas sur la surface vitrée 5 ou bien n'est pas monté sur son bras et ne subit aucune contrainte ou d'effort, la lèvre 7 est placée dans le plan médian longitudinal de la raclette 6, symbolisé par l'axe 37.

La figure 3 est une vue de profil d'un balai d'essuie vitre suivant l'invention représenté en position inactive tel qu'il serait positionné sur une surface vitrée 5. Cette surface vitrée 5 présente usuellement une courbure plus ou moins prononcée selon l'emplacement parcouru par le balai d'essuie glace 1 lors de ses déplacements au contact de celle-ci, sur laquelle le balai d'essuie glace 1 suivant l'invention s'adapte parfaitement. En position inactive, la lèvre 7 de la raclette 6, placé à proximité du bord inférieur de la surface vitrée, en appui sensiblement horizontal dans le sens longitudinal sur le pare brise 5 monté sur la carrosserie en position inclinée, forme une concavité sur sa longueur orientée vers le haut. Dans cette configuration le talon d'appui 7a de la lèvre 7 vient en appui sur le talon 9a de l'armature 9 de la raclette 6. L'ensemble 34 constitué d'un conduit 23 et d'un gicleur 24 se trouve compte tenu de la configuration sensiblement au dessus de la concavité de la lèvre 7 de la raclette 6. En particulier, Le conduit 23 peut être équipé à son extrémité d'un gicleur à rotule sphérique 24 permettant de délivrer un jet de liquide de lavage 25 sur la lèvre 7 de la raclette 6 du balai d'essuie glace 1 de façon plus précise. Ce jet de liquide 25 est réglé de façon qu'il soit sensiblement cylindrique de manière que le liquide de lavage se répande régulièrement dans la concavité de la lèvre 7 la raclette 6 sur la majeure partie de sa longueur. On comprend sur la figure que la raclette 6, est dans une position sensiblement parallèle à la bordure inférieure de surface vitrée favorise l'écoulement régulier du liquide de lavage le long de la lèvre 7 de la raclette 6. Le fait de déverser le liquide de lavage sur la raclette permet de l'humidifier, notamment au contact de l'extrémité de la lèvre sur la surface vitrée car souvent un collement de la lèvre 7 de la raclette 6 se produit, cette humidification favorise le décollement et le frottement de la lèvre 7 de la raclette 6 de la surface vitrée 5, ce qui est bénéfique et augmente avantageusement la longévité de la raclette 6. Lors de l'inversion du mouvement d'essuyage la lèvre 7 de la raclette 6 subit une rotation autour de la charnière 8. Dès cette mise en mouvement de l'essuyage, la lèvre 7 de la raclette 6 va subir une rotation et le talon d'appui 7b de la lèvre 7 va venir en appui sur le talon 9b de l'armature 9 de la raclette 6 comme cela est montré à l'appui de la figure 4.

La figure 4 est une vue de profil d'un balai d'essuie vitre suivant dans une position de balayage de la surface vitrée 5 suivant la flèche F. Dans cette position, le balai d'essuie glace 1 réalise le lavage et l'essuyage de la surface vitrée 5, dans cette position la lèvre 7 de la raclette 6 s'est retournée autour de la charnière 8 d'articulation et le talon d'appui 7b de la lèvre 7 vient en appui sur le talon 9b de l'armature 9 de la raclette 1. Dans cette disposition, le liquide de lavage 26 s'interpose dans l'angle formé entre l'extrémité de la lèvre 7 de la raclette 6 et la surface vitrée 5 sur toute la longueur de la raclette 6. On comprend bien que dans cette disposition le lavage de la surface vitrée est optimum, puisque seul le liquide de lavage nécessaire et suffisant est délivré au niveau de la raclette 6 pour obtenir le nettoyage efficace de la zone balayée par les balais d'essuie glace 1.

La figure 5 est une vue en perspective de l'extrémité d'un balai d'essuie glace équipé d'un embout terminal recevant le conduit équipé d'un gicleur suivant l'invention. Sur cette vue en perspective de l'extrémité d'un balai d'essuie glace 1, nous voyons l'ossature 18 pourvue d'un enjoliveur constitué d'un capuchon 19. L'extrémité du balai d'essuie glace 1 est donc équipé du capuchon 19 sur laquelle est clippé le support 21, celui-ci est d'une longueur appropriée pour assurer son maintien sur le capuchon 19. Un support secondaire en forme d'anneau élastique 22 nantit d'une ouverture 22a, est solidaire du support 21 sur une des branches inférieures 21a. Le conduit 23 est enserré dans l'anneau élastique 22 dans une position parallèle à la lèvre 7. Le conduit 23 est équipé à son extrémité terminale d'un gicleur à rotule sphérique 24. A l'autre extrémité le conduit 23 possède un raccord 23a sur lequel s'emboîte une canalisation souple 27. La canalisation 27 rejoint le bras de l'essuie glace et chemine dans une cavité de celui-ci jusqu'à une pompe associée à une réserve de fluide de lavage placée dans le compartiment moteur du véhicule. La pompe est dimensionnée pour délivrer le fluide de lavage au gicleur 24 nécessaire pour effectuer l'opération de lavage et d'essuyage de la surface vitrée 5.

La figure 6 est une vue en section B-B de l'extrémité d'un balai d'essuie glace équipé d'un embout terminal montrant le conduit équipé de son gicleur suivant l'invention. Cette vue permet de bien visualiser la position du conduit 23 et du gicleur 24 par rapport à la lèvre 7. Sur cette vue, nous voyons la lèvre 7 et le conduit 23 dans une position parallèle et juxtaposé sur toute sa longueur à la position longitudinale de la lèvre 7 et sur laquelle le gicleur 24 est légèrement orienté vers la lèvre 7. Le conduit 23 possède un raccord 23a à son extrémité opposée au gicleur 24 sur lequel est emboîtée la canalisation 27.

La figure 7, qui peut être considérée en liaison avec des balais positionnés de façon identique à ceux de la figure 1, montre que sur un pare-brise par exemple à bords arrondis, avec le gicleur 24 centré sur la cavité ou concavité de la lèvre 7 du balai d'essuie-glace 1, le jet 25 de liquide de lavage se répand dans la cavité et suit la courbure du pare-brise.

Cette opération n'est pas possible avec un gicleur classique qui projette le jet 25 de liquide de lavage de façon rectiligne comme cela est représenté en traits mixtes sur la figure 7, où ce jet est projeté tangentiellement à la courbure du pare-brise ou de la surface vitrée.

Nous allons maintenant décrire une opération de lavage et d'essuyage d'une surface vitrée 5, avec un dispositif de lavage et d'essuyage équipé de balais d'essuie glaces 1 suivant l'invention. Lorsque le conducteur souhaite nettoyer son pare brise 5, il actionne la commande prévue à cet effet, dans une première étape, le gicleur 24 projette un jet de liquide de lavage sur la concavité de la lèvre 7 de raclette 6, celle-ci étant en position inactive, sur une majeure partie de sa longueur, par exemple 95 pour cent puis dans une seconde étape, le balayage s'effectue, au préalable la lèvre 7 de la raclette 6 s'est retournée et le fluide de lavage s'interpose dans l'angle formé entre l'extrémité de la lèvre 7 de la raclette 6 et la surface vitrée 5 sur toute la longueur de la raclette 6, de cette façon le fluide de lavage est réparti régulièrement le long de la lèvre 7 de la raclette 6. En outre, lors du mouvement de balayage,

La force centrifuge permet de véhiculer le fluide jusqu'à l'extrémité supérieure de la raclette 6 permettant de nettoyer l'ensemble des zones 4a-4b du pare brise sur toute leur surface. Par ailleurs, un autre gicleur peut être placé sur la raclette 6 de façon alternée par rapport au gicleur 24 placé à l'extrémité inférieure de la raclette 6 de manière à délivrer un jet de liquide de lavage avant son retournement et retour de la raclette 6 dans sa position initiale.

Le balai d'essuie glace et le procédé de lavage et d'essuyage d'une surface vitrée permettent de limiter de façon importante l'utilisation du fluide de lavage en ne délivrant que le juste nécessaire, ce qui peut conduire à réduire notoirement le volume des réservoirs de liquide de lavage, et permette de diminuer le poids global des véhicules et l'émission de CO2. De surcroit, ce procédé améliore la sécurité en supprimant la projection de spray masquant la visibilité au conducteur pendant le nettoyage du pare brise ou par roulage nocturne.

Bien entendu, il va de soi que l'invention ne se limite pas au seul exemple de réalisation plus spécialement décrit et représentés en référence aux dessins annexés ; elle en embrasse au contraire toutes les variantes, définies dans l'objet des revendications. Par exemple, le gicleur peut-être monté sur tous les types de raclettes et la surface vitrée peut être également une lunette arrière de véhicule ou la surface vitrée d'un projecteur.

Il va de soi également que le jet de liquide de lavage peut être projeté dans la concavité de la lèvre de la raclette sur la totalité de sa longueur.

## Revendications

1. Balai d'essuie-glace (1) de véhicule automobile, comportant :
- une raclette souple (6) allongée ;
- une sortie de conduit (23) disposée de manière à pouvoir projeter un jet de liquide selon sensiblement la direction longitudinale de la raclette (6) ; où la sortie de conduit (23) est décalée sur le côté de la raclette souple (6) par rapport au plan médian longitudinal de la raclette souple (6), et où la raclette (6) supporte, un conduit (23) équipé d'un gicleur (24), décalé latéralement par rapport à l'axe longitudinal médian de la raclette (6) d'une distance telle que lorsque le balai d'essuie-glace (1) est en position inactive sur la surface vitrée, l'orifice du gicleur (24) soit positionné en direction de la partie concave de la lèvre (7) de la raclette , de manière que le jet de liquide de lavage (25) se répande sur la majeure partie de la longueur de la lèvre (7) de la raclette (6) **caractérisé en ce que** la forme du jet de liquide est cylindrique et **en ce que** l'orifice du gicleur est positionné afin de projeter le liquide de lavage uniformément dans la concavité longitudinale de la lèvre de la raclette du balai d'essuie-glace.

2. Balai d'essuie-glace (1) de véhicule automobile selon la revendication 1, **caractérisé en ce que** la sortie de conduit est disposée au niveau d'une des deux extrémités de la raclette.

3. Balai d'essuie-glace (1) de véhicule automobile selon la revendication 2, **caractérisé en ce que** la sortie de conduit est disposée le long de la raclette.

4. Balai d'essuie-glace (1) selon l'une des revendications 1 à 3, **caractérisé en ce que** l'axe du gicleur (24) est disposé parallèlement à la lèvre (7) de la raclette (6) de manière à diriger le fluide de lavage sur la concavité de la lèvre (7) de la raclette (6) lorsque celle-ci est dans sa position d'arrêt, avant son retournement.

5. Balai d'essuie-glace (1) selon l'une des revendications 1 à 3, **caractérisé en ce que** l'axe du gicleur (24) est orienté en direction de la lèvre (7) de la raclette (6) de manière à diriger le fluide de lavage sur la lèvre (7) de la raclette (6) lorsque celle-ci est dans sa position d'arrêt, avant son retournement en vue d'effectuer l'essuyage de la surface vitrée (5a).

6. Balai d'essuie-glace (1) selon l'une quelconque des revendications précédentes, **caractérisé en ce que** le conduit (23) du gicleur (24) est disposé dans un anneau élastique (22) constitutif d'un support lui-même clippé (21) de façon appropriée sur l'extrémité du balai d'essuie-glace (1) de sorte que le conduit (23) est maintenu dans une position déterminée par rapport à la lèvre (7) de la raclette (6).

7. Balai d'essuie-glace (1) selon l'une quelconques des revendications 1 à 6, **caractérisé en ce que** le conduit (23) du gicleur (24) comporte à son extrémité opposée au gicleur un moyen de raccordement (23a) d'une canalisation (27) destinée à véhiculer le fluide de lavage du réservoir de stockage en direction du conduit (23) et du gicleur (24).

8. Balai d'essuie-glace (1) selon l'une quelconques des revendications précédentes, **caractérisé en ce que** le conduit (23) de sortie délivre un débit constant.

9. Bras d'essuie-glace portant un balai d'essuie-glace selon l'une quelconque des revendications précédentes, **caractérisé en ce que** la sortie de conduit est disposée au niveau de l'extrémité de la raclette qui est située du côté de la fixation du bras.

10. Véhicule comportant un moyen de lavage et d'essuyage d'une surface vitrée, ledit moyen de lavage comportant au moins un balai d'essuie-glace selon l'une quelconque des revendications 1 à 8.

11. Procédé de lavage et d'essuyage d'une surface vitrée (5) au moyen d'au moins un balai d'essuie-glace (1) comportant une raclette souple (6), allongée, en appui sur la surface vitrée (5) à balayer, la raclette souple (6) supportant, une sortie de conduit (23) décalée sur le côté de la raclette souple (6) d'une distance telle que lorsque le balai d'essuie-vitre (1) est en position de fin de course de l'essuie-vitre sur la surface vitrée (5), la sortie de conduit (23) est positionnée en regard de la partie concave de la lèvre (7) de la raclette (6), comprenant :
- avant le démarrage de la raclette (6), une étape d'écoulement du jet de liquide de lavage de forme cylindrique sur la majeure partie de la longueur de la partie concave de la lèvre (7) de la raclette (6) par la sortie de conduit (23) disposée,
- lors de la mise en mouvement de la raclette (6), une étape de retournement la lèvre (7) au cours de laquelle le liquide de lavage (26) se répand sur la partie de la lèvre (7) en contact avec la surface vitrée (5) afin de réaliser le lavage de la zone vitrée à nettoyer.

12. Procédé de lavage et d'essuyage d'une surface vitrée (5) selon la revendication 11 **caractérisé en ce que** le jet de lavage est régulé pour s'écouler sur la longueur de la lèvre (7) de la raclette (6) sur au moins les trois quarts de sa longueur.

13. Procédé de lavage et d'essuyage d'une surface vitrée (5) selon l'une quelconque des revendications 11 ou 12, **caractérisé en ce que** le liquide de lavage se répand depuis le gicleur (24) disposé sur une première extrémité de la lèvre de la raclette (6), jusqu'à une deuxième extrémité de la lèvre de la raclette sous l'effet de la force centrifuge lorsque la raclette (6) est en mouvement, la deuxième extrémité décrivant un plus grand rayon dans son mouvement que la première extrémité.

14. Procédé de lavage et d'essuyage d'une surface vitrée (5) selon la revendication 11, **caractérisé en ce que** lors de l'arrêt de la raclette (6) dans sa position sensiblement vertical en fin de course de la zone à essuyer, avant son retournement un jet de liquide de lavage est répandu sur la longueur de la lèvre de la raclette par le gicleur disposé sur l'extrémité de la raclette (6) décrivant un plus grand rayon que l'autre extrémité.

15. Procédé selon l'une quelconque des revendications 11 à 14, **caractérisé en ce que** le balai d'essuie-glace (1) est conçu selon l'une quelconque des revendications 1 à 8.

## Patentansprüche

1. Scheibenwischerblatt (1) für Kraftfahrzeug, das Folgendes umfasst:
- ein längliches biegsames Wischblatt (6);
- einen Leitungsausgang (23), der derart angeordnet ist, dass er einen Flüssigkeitsstrahl gemäß im Wesentlichen der Längsrichtung des Wischblatts (6) projizieren kann;
wobei der Leitungsausgang (23) auf der Seite des biegsamen Wischblatts (6) in Bezug auf die Längsmittenebene des biegsamen Wischblatts (6) versetzt ist, und
wobei das Wischblatt (6) eine Leitung (23) trägt, die mit einer Düse (24) ausgestattet ist, die seitlich in Bezug auf die Mittenlängsachse des Wischblatts (6) um einen Abstand derart versetzt ist, dass, wenn das Scheibenwischerblatt (1) in inaktiver Position auf der Glasfläche ist, die Öffnung der Düse (24) in Richtung des konkaven Teils der Lippe (7) des Wischblatts positioniert ist, so dass sich der Waschflüssigkeitsstrahl (25) auf dem Großteil der Länge der Lippe (7) des Wischblatts (6) verteilt, **dadurch gekennzeichnet, dass** die Form des Flüssigkeitsstrahls zylindrisch ist, und dass die Öffnung der Düse positioniert ist, um die Waschflüssigkeitsgleichmäßigkeit in die Längskonkavität der Lippe des Wischblatts des Scheibenwischerblatts zu projizieren.

2. Scheibenwischerblatt (1) für Kraftfahrzeug nach Anspruch 1, **dadurch gekennzeichnet, dass** der Leitungsausgang im Bereich eines der zwei Enden des Wischblatts angeordnet ist.

3. Scheibenwischerblatt (1) für Kraftfahrzeug nach Anspruch 2, **dadurch gekennzeichnet, dass** der Leitungsausgang entlang des Wischblatts angeordnet ist.

4. Scheibenwischerblatt (1) nach einem der Ansprüche 1 bis 3, **dadurch gekennzeichnet, dass** die Achse der Düse (24) parallel zu der Lippe (7) des Wischblatts (6) derart angeordnet ist, dass die Waschflüssigkeit auf die Konkavität der Lippe (7) des Wischblatts (6) gerichtet wird, wenn dieses in seiner Stoppposition vor seinem Umkehren ist.

5. Scheibenwischerblatt (1) nach einem der Ansprüche 1 bis 3, **dadurch gekennzeichnet, dass** die Achse der Düse (24) in Richtung der Lippe (7) des Wischblatts (6) derart ausgerichtet ist, dass die Waschflüssigkeit auf die Lippe (7) des Wischblatts (6) gerichtet wird, wenn sich dieses in seiner Stoppposition, vor seinem Umkehren zum Ausführen des Abwischens der Glasfläche (5a) befindet.

6. Scheibenwischerblatt (1) nach einem der vorhergehenden Ansprüche, **dadurch gekennzeichnet, dass** die Leitung (23) der Düse (24) in einem elastischen Ring (22) angeordnet ist, der einen Träger bildet, der selbst zweckdienlich auf dem Ende des Scheibenwischerblatts (1) derart geclipst ist (21), dass die Leitung (23) in einer bestimmten Position in Bezug auf die Lippe (7) des Wischblatts (6) gehalten wird.

7. Scheibenwischerblatt (1) nach einem der Ansprüche 1 bis 6, **dadurch gekennzeichnet, dass** die Leitung (23) der Düse (24) an ihrem Ende, das der Düse gegenüberliegt, ein Anschlussmittel (23a) einer Kanalisation (27) umfasst, die dazu bestimmt ist, die Waschflüssigkeit von dem Lagerbehälter in Richtung der Leitung (23) und der Düse (24) zu befördern.

8. Scheibenwischerblatt (1) nach einem der vorhergehenden Ansprüche, **dadurch gekennzeichnet, dass** die Ausgangsleitung (23) einen konstanten Durchfluss abgibt.

9. Scheibenwischerarm, der ein Scheibenwischerblatt nach einem der vorhergehenden Ansprüche trägt, **dadurch gekennzeichnet, dass** der Leitungsausgang im Bereich des Endes des Wischblatts, das auf der Seite der Befestigung des Arms liegt, angeordnet ist.

10. Fahrzeug, das ein Mittel zum Waschen und Abwischen einer Glasfläche umfasst, wobei das Mittel zum Waschen mindestens ein Scheibenwischerblatt nach einem der Ansprüche 1 bis 8 umfasst.

11. Verfahren zum Waschen und Abwischen einer Glasfläche (5) mittels mindestens eines Scheibenwischerblatts (1), das ein längliches biegsames Wischblatt (6) in Auflage auf der Glasfläche (5), die abzuwischen ist, umfasst, wobei das biegsame Wischblatt (6) einen Leitungsausgang (23) stützt, der auf der Seite des biegsamen Wischblatts (6) um einen Abstand derart versetzt ist, dass, wenn das Scheibenwischerblatt (1) in Hubendposition des Scheibenwischers auf der Glasfläche (5) ist, der Leitungsausgang (23) gegenüber dem konkaven Teil der Lippe (7) des Wischblatts (6) positioniert ist, umfassend:
- vor dem Starten des Wischblatts (6), einen Fließschritt des Waschflüssigkeitsstrahls mit zylindrischer Form auf dem Großteil der Länge des konkaven Teils der Lippe (7) des Wischblatts (6) durch den angeordneten Leitungsausgang (23),
- vor dem Inbewegungsetzen des Wischblatts (6) einen Umkehrschritt der Lippe (7), in dessen Verlauf sich die Waschflüssigkeit (26) auf dem Teil der Lippe (7), der mit der Glasfläche (5) in Berührung ist, verteilt, um das Waschen der zu reinigenden verglasten Zone auszuführen.

12. Verfahren zum Waschen und Abwischen einer Glasfläche (5) nach Anspruch 11, **dadurch gekennzeichnet, dass** der Waschstrahl reguliert ist, um auf der Länge der Lippe (7) des Wischblatts (6) auf mindestens den drei Vierteln seiner Länge zu fließen.

13. Verfahren zum Waschen und Abwischen einer Glasfläche (5) nach einem der Ansprüche 11 oder 12, **dadurch gekennzeichnet, dass** sich die Waschflüssigkeit ausgehend von der Düse (24), die auf einem ersten Ende der Lippe des Wischblatts (6) angeordnet ist, bis zu einem zweiten Ende der Lippe des Wischblatts unter der Einwirkung der Zentrifugalkraft verteilt, wenn das Wischblatt (6) in Bewegung ist, wobei das zweite Ende bei seiner Bewegung einen größeren Radius beschreibt als das erste Ende.

14. Verfahren zum Waschen und Abwischen einer Glasfläche (5) nach Anspruch 11, **dadurch gekennzeichnet, dass** beim Stoppen des Wischblatts (6) in seiner im Wesentlichen vertikalen Position am Hubende der abzuwischenden Zone, vor seinem Umkehren, ein Waschflüssigkeitsstrahl auf der Länge der Lippe des Wischblatts durch die Düse, die auf dem Ende des Wischblatts (6), das einen größeren Radius beschreibt als das andere Ende, angeordnet ist, verteilt wird.

15. Verfahren nach einem der Ansprüche 11 bis 14, **dadurch gekennzeichnet, dass** das Scheibenwischerblatt (1) nach einem der Ansprüche 1 bis 8 konzipiert ist.

## Claims

1. A windscreen-wiper blade (1) of a motor vehicle, comprising:
- an elongate flexible squeegee strip (6);
- a conduit outlet (23) arranged so as to be able to project a jet of liquid along substantially the longitudinal direction of the squeegee strip (6) ;
where the conduit outlet (23) is offset on the side of the flexible squeegee strip (6) with respect to the longitudinal median plane of the flexible squeegee strip (6), and
where the squeegee strip (6) supports, a conduit (23) equipped with a nozzle (24), offset laterally with respect to the longitudinal median axis of the squeegee strip (6) by a distance such that when the windscreen-wiper blade (1) is in inactive position on the glazed surface, the orifice of the nozzle (24) is positioned in the direction of the concave part of the lip (7) of the squeegee strip such that the jet of washing liquid (25) spreads over the majority of the length of the lip (7) of the squeegee strip (6), **characterized in that** the shape of the jet of liquid is cylindrical and **in that** the orifice of the nozzle is positioned so as to project the washing liquid uniformly in the longitudinal concavity of the lip of the squeegee strip of the windscreen-wiper blade.

2. The windscreen-wiper blade (1) of a motor vehicle according to claim 1, **characterized in that** the conduit outlet is arranged at the level of one of the two ends of the squeegee strip.

3. The windscreen-wiper blade (1) of a motor vehicle according to claim 2, **characterized in that** the conduit outlet is arranged along the squeegee strip.

4. The windscreen-wiper blade (1) according to one of claims 1 to 3, **characterized in that** the axis of the nozzle (24) is arranged parallel to the lip (7) of the squeegee strip (6) so as to direct the washing fluid over the concavity of the lip (7) of the squeegee strip (6) when the latter is in its stop position, before its reversal.

5. The windscreen-wiper blade (1) according to one of claims 1 to 3, **characterized in that** the axis of the nozzle (24) is oriented in the direction of the lip (7) of the squeegee strip (6) so as to direct the washing fluid on the lip (7) of the squeegee strip (6) when the latter is in its stop position, before its reversal with the purpose of wiping the glazed surface (5a) .

6. The windscreen-wiper blade (1) according to any one of the preceding claims, **characterized in that** the conduit (23) of the nozzle (24) is arranged in an elastic ring (22) constituting a support, itself clipped (21) in a suitable manner on the end of the windscreen-wiper blade (1) such that the conduit (23) is held in a specific position with respect to the lip (7) of the squeegee strip (6).

7. The windscreen-wiper blade (1) according to any one of claims 1 to 6, **characterized in that** the conduit (23) of the nozzle (24) comprises at its end opposite the nozzle a connecting means (23a) of a channel (27) intended to convey the washing fluid from the storage reservoir in the direction of the conduit (23) and of the nozzle (24).

8. The windscreen-wiper blade (1) according to any one of the preceding claims, **characterized in that** the outlet conduit (23) delivers a constant flow rate.

9. A windscreen-wiper arm carrying a windscreen-wiper blade according to any one of the preceding claims, **characterized in that** the conduit outlet is arranged at the level of the end of the squeegee strip which is situated on the side of the attachment of the arm.

10. A vehicle comprising a washing and wiping means of a glazed surface, said washing means comprising at least one windscreen-wiper blade according to any one of claims 1 to 8.

11. A method for washing and wiping a glazed surface (5) by means of at least one windscreen-wiper blade (1) comprising a flexible squeegee strip (6), which is elongate, resting on the glazed surface (5) which is to be wiped, the flexible squeegee strip (6) supporting, a conduit outlet (23) offset on the side of the flexible squeegee strip (6) by a distance such that when the windscreen-wiper blade (1) is in the position of the end of its windscreen-wiping travel over the glazed surface (5), the conduit outlet (23) is positioned facing the concave part of the lip (7) of the squeegee strip (6), comprising:
- before the start-up of the squeegee strip (6), a step of flowing of the jet of washing liquid of cylindrical shape over the majority of the length of the concave part of the lip (7) of the squeegee strip (6) by the disposed conduit outlet (23),
- on the setting in motion of the squeegee strip (6), a step of reversal of the lip (7) during which the washing liquid (26) spreads over the part of the lip (7) in contact with the glazed surface (5) so as to carry out the washing of the glazed area which is to be cleaned.

12. The method of washing and wiping a glazed surface (5) according to claim 11, **characterized in that** the washing jet is regulated to flow over the length of the lip (7) of the squeegee strip (6) over at least three-quarters of its length.

13. The method of washing and wiping a glazed surface (5) according to any one of claims 11 or 12, **characterized in that** the washing liquid spreads from the nozzle (24) arranged on a first end of the lip of the squeegee strip (6), up to a second end of the lip of the squeegee strip under the effect of the centrifugal force when the squeegee strip (6) is in motion, the second end describing a greater radius in its movement than the first end.

14. The method of washing and wiping a glazed surface (5) according to claim 11, **characterized in that** at the stopping of the squeegee strip (6) in its substantially vertical position at the end of travel of the area to be wiped, before its reversal, a jet of washing liquid is spread over the length of the lip of the squeegee strip by the nozzle arranged on the end of the squeegee strip (6) describing a greater radius than the other end.

15. The method according to any one of claims 11 to 14, **characterized in that** the windscreen-wiper blade (1) is designed according to any one of claims 1 to 8.
